# EUROPÄISCHE PATENTSCHRIFT

(11) **EP 1 349 699 B1**
(45) Veröffentlichungstag und Bekanntmachung des Hinweises auf die Patenterteilung: **07.05.2008**
(21) Anmeldenummer: 02701252.5
(22) Anmeldetag: 11.01.2002
(51) Int. Cl.: B23Q 7/14, B23Q 1/03, B23Q 1/28, B23Q 5/34, B23Q 1/62

(54) **POSITIONIEREINRICHTUNG FÜR AUF SCHIENEN ANGEORDNETE WERKSTÜCKTRÄGER**
POSITIONING DEVICE FOR WORKPIECE CARRIERS ARRANGED ON RAILS
DISPOSITIF DE POSITIONNEMENT POUR SUPPORTS DE PIECES A USINER DISPOSES SUR DES RAILS

(30) Priorität: 12.01.2001 DE 20100639 U
(43) Veröffentlichungstag der Anmeldung: 08.10.2003
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang
(86) Internationale Anmeldenummer: PCT/EP2002/000222
(87) Internationale Veröffentlichungsnummer: WO 2002/055258

(56) Entgegenhaltungen:
- WO-A-00/66306
- DD-A- 301 474
- DE-A- 19 538 830
- DE-C- 4 444 339
- DE-C- 19 921 048
- PATENT ABSTRACTS OF JAPAN vol. 1997, no. 10, 31. Oktober 1997 (1997-10-31) -& JP 09 162260 A (NEC CORP), 20. Juni 1997 (1997-06-20)

## Beschreibung

### Technisches Gebiet

Die Erfindung bezieht sich auf eine Positioniereinrichtung für auf zwei oder mehreren nebeneinander angeordneten Schienen angeordnete Werkstückträger, wobei zwei oder mehrere Werkstückträger auf jeder Schiene in deren Längsrichtung hintereinander verfahrbar angeordnet und unabhängig voneinander in wählbaren Positionen fixierbar sowie dazu entsprechend ansteuerbar sind.

Die genannten Werkstückträger dienen zur Aufnahme von Werkstücken, insbesondere von plattenförmigen Werkstücken, an denen an einer oder an mehreren Bearbeitungsstationen Bearbeitungen oder Montagen vorgenommen werden. Vornehmlich geht es darum, größere plattenförmige Werkstücke auf einer Mehrzahl solcher Werkstückträger aufzunehmen, wobei die Werkstückträger so positioniert werden, daß sie bei den Bearbeitungs- und Montagevorgängen nicht stören und nicht beschädigt werden. Zum einen wird dies dadurch erreicht, daß die hintereinander in Reihe auf der jeweiligen Schiene angeordneten Werkstückträger relativ zueinander verfahren werden, zum anderen können auch die die Werkstückträger tragenden Schienen relativ zueinander in ihrer Querrichtung bewegt werden.

### Stand der Technik

Eine Positioniereinrichtung der vorstehend erläuterten Art ist aus der DE 44 44 339 C1 bekannt. Die Werkstückträger der in diesem Dokument beschriebenen Werkzeugmaschine sind als sogenannte Saugspanner ausgebildet, auf denen die Werkstücke mittels Unterdruck fixiert werden. Damit die Werkstückträger zur Anpassung an Werkstücke mit unterschiedlichen Formaten in die jeweils passende Position verfahren werden können, sind sie mit einem Fremdantrieb kuppelbar. Dazu ist oberhalb der Bearbeitungsplatz- bzw. Aufspannebene, welche durch die Oberseiten der Werkstückträger gebildet wird, bei der bekannten Maschine ein verfahrbarer Ausleger angeordnet, der eine Mitnahmevorrichtung trägt, die mit jedem der Werkstückträger in Eingriff gebracht werden kann.

Es sind auch anderweitige voll automatisierte Positioniereinrichtungen bekannt, bei denen die einzelnen Werkstückträger mittels einer Positionierachse an der gewählten Stelle auf der betreffenden Schiene positioniert werden können. Hierbei ist jeder Werkstückträger mit einem eigenen Antrieb und einem eigenen Steuersystem ausgestattet. Zwar ist damit eine schnelle, flexible Positionierung jedes Werkstückträgers möglich, der maschinelle und steuerungsmäßige Aufwand für solche Positioniereinrichtungen ist jedoch sehr erheblich.

### Darstellung der Erfindung

Ausgehend von dem vorgenannten Stand der Technik beruht die Erfindung darauf, daß es zur Positionierung der einzelnen Werkstückträger auf jeder der Schienen nicht erforderlich ist, jeden der Werkstückträger mit einem eigenen Antrieb zu versehen. Dazu ist es auch nicht erforderlich, jeden der Werkstückträger mit einem Fremdantrieb kuppeln zu können. Denn die gemeinsam in einer Reihe hintereinander auf einer Schiene angeordneten Werkstückträger können beim Verfahren entlang der Schiene nicht voneinander ausweichen, weswegen die Möglichkeit besteht, einen Werkstückträger dadurch zu verfahren, daß er von einem anderen verschobenen Werkstückträger mitgenommen wird, wobei dafür gesorgt werden muß, daß dies in beiden Verfahrrichtungen auf der betreffenden Schiene vonstatten gehen kann.

Der Erfindung liegt deshalb die Aufgabe zugrunde, eine Positioniereinrichtung der eingangs genannten Art zu schaffen, bei der der für das Verfahren der Werkstückträger auf den Schienen erforderliche Antrieb erheblich vereinfacht ist.

Diese Aufgabe wird durch eine Positioniereinrichtung gemäß Anspruch 1 gelöst.

Zur Lösung der Aufgabe weisen die auf den Schienen verfahrbaren Werkstückträger Kupplungsvorrichtungen auf, mit denen sie jeweils mit einem auf der zugeordneten Schiene benachbarten Werkstückträger kuppelbar sind. Zum Verfahr-Antrieb jeweils nur einer der Werkstückträger auf einer der Schienen ist an dieser Schiene und/oder an diesem einen Werkstückträger eine Antriebseinheit vorgesehen, und bei den weiteren Werkstückträgern auf dieser Schiene handelt es sich um nicht selbst angetriebene Werkstückträger, die erforderlichenfalls von dem angetriebenen Werkstückträger oder von einem hiervon bewegten Werkstückträger zum Verfahren in eine neue Position mitgenommen werden.

Für die Erfindung ist wesentlich, daß die Werkstückträger untereinander kuppelbar sind, um die Werkstückträger nicht nur bei Anlage aneinander als Schubeinheit verfahren zu können, sondern sie auch in entgegengesetzter Verfahrrichtung dadurch positionieren zu können, daß sie zu einem Werkstückträger-Zug miteinander kuppelbar sind. Zur Kupplung der Werkstückträger kann in besonderer Ausführung die Schwerkraft genutzt werden.

### Kurzbeschreibung der Zeichnungen

Es zeigen im einzelnen
- Fig. 1: die perspektivische Ansicht einer einzigen Schiene einer Positioniereinrichtung mit vier darauf angeordneten Werkstückträgern in einer Referenz- oder Ausgangsposition,
- Fig. 2: eine der Fig. 1 entsprechende perspektivische Ansicht, in der die einzelnen Werkstückträger jeweils definierte Positionen einnehmen,
- Fig. 3: eine andere perspektivische Ansicht der Anordnung nach Fig. 1 in anderer Position der Werkstückträger,
- Fig. 4: eine vergrößerte perspektivische Darstellung der zwischen zwei Werkzeugträgern wirksamen Kupplungsvorrichtung,
- Fig. 5: einen Längsschnitt durch zwei benachbarte Werkstückträger im Bereich der außer Eingriff stehenden Kupplungsvorrichtung,
- Fig. 6: einen der Fig. 5 entsprechenden Längsschnitt jedoch bei ineingriffstehenden Kupplungsvorrichtungen der benachbarten Werkstückträger,
- Fig. 7: eine perspektivische Ansicht eines Werkstückträgers auf einer Schiene, die einen darin integrierten Antriebsriemen aufweist,
- Fig. 8: eine perspektivische Ansicht eines Werkstückträgers auf einer Schiene, der einen Eigenantrieb aufweist,
- Fig. 9: die Draufsicht auf eine komplette Positioniereinrichtung mit einer Mehrzahl nebeneinanderliegender Schienen und darauf angeordneten Werkstückträgern und
- Fig. 10: eine weitere Draufsicht auf eine komplette Positioniereinrichtung in anderer Ausführung.

### Bester Weg zur Ausführung der Erfindung

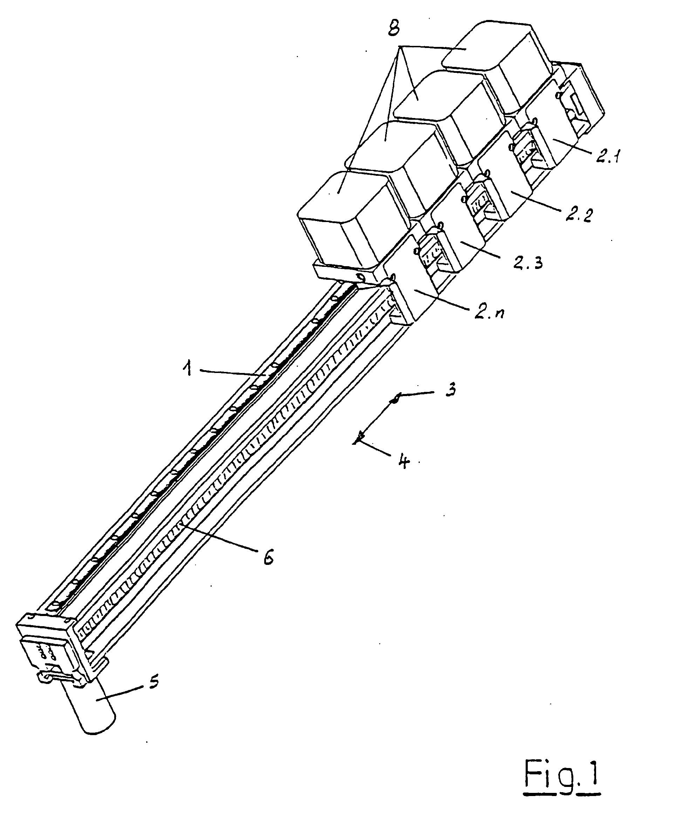

Die in den Fig. 1 bis 3 teilweise dargestellte, vorzugsweise modular aufgebaute Positioniereinrichtung weist Schienen auf, von denen hier nur eine Schiene 1 gezeigt ist, auf der Werkstückträger 2.1, 2.2, 2.3, 2.n, in den Pfeilrichtungen 3 und 4 verschiebbar bzw. verfahrbar gelagert sind. Mit 5 ist ein unter der Schiene 1 angeordneter Motor bezeichnet, der Teil einer Antriebseinheit 5, 15 ist. In der vorliegenden Ausführung treibt der Motor 5 einen Zahnriemen 6 an, mit dem einer der Werkstückträger 2.1, 2.2, 2.3, 2.n, insbesondere der Werkstückträger 2.1, zum Zwecke der programmkonformen Verfahrung der Werkstückträger 2.2, 2.3, 2.n zu einzelnen Positionen 7, 8 mechanisch verbindbar ist. In der jeweils passenden Position 7, 8 wird auf den Werkstückträgern 2.1, 2.2, 2.3, 2.n ein Werkstück aufgenommen. Die Werkstückträger 2.1 - 2.n sind in den angefahrenen Positionen 7, 8 an der Schiene 1 fixierbar.

Anstelle des schienenortsfest angeordneten Motors 5 kann in einen der Werkstückträger 2.1, 2.2, 2.3, 2.n, insbesondere in den Werkstückträger 2.1, eine geeignete, eigene Antriebseinheit eingebaut sein. Zu diesem Zweck kann die Schiene 1 mit einer nicht näher dargestellten Zahnstange für den Eingriff eines Antriebsritzels der Antriebseinheit an dem Werkstückträger 2.1 ausgestattet sein.

Fig. 1 zeigt die vorgesehenen Werkstückträger 2.1, 2.2, 2.3, 2.n auf der Schiene 1 in der Ausgangs- oder der sogenannten Referenzposition.

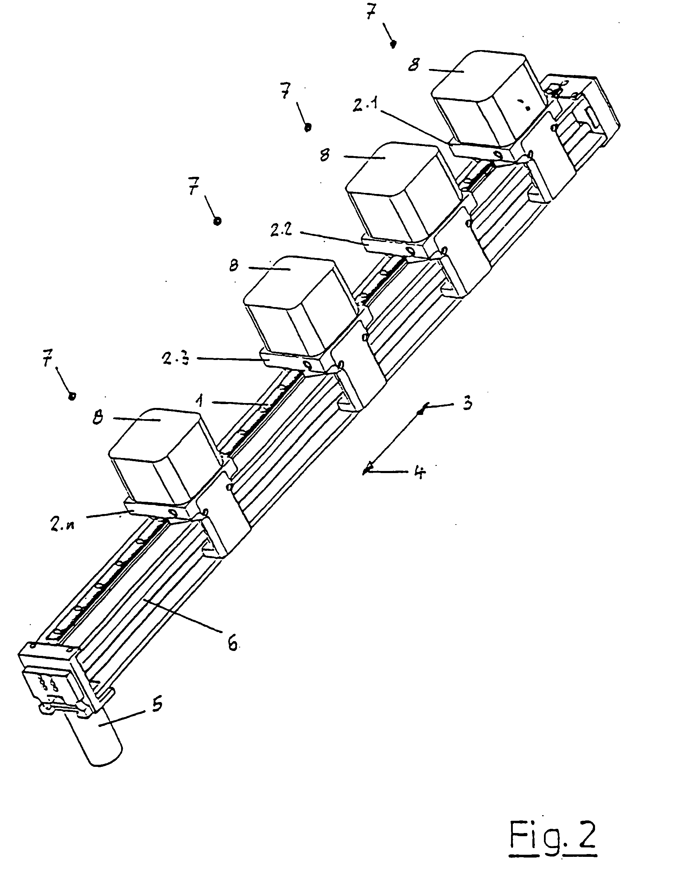

Fig. 2 zeigt die Werkstückträger 2.1 bis 2.n in ihrer jeweiligen definierten Position 7, 8 die von dem Steuerungsprogramm der Positioniereinrichtung vorgegeben ist und in der die Werkstückträger 2.1 - 2.n fixierbar sind.

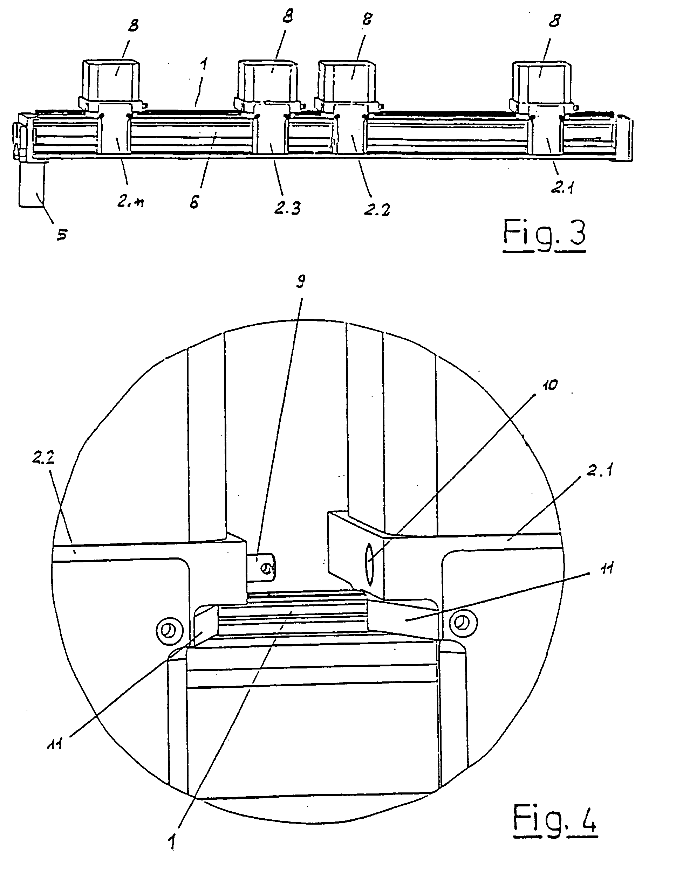

Die Fig. 3 und 4 zeigen die zwischen den einzelnen Werkstückträgern 2.1 - 2.n vorhandenen, lösbaren sowie insbesondere fernsteuerbaren Kupplungsvorrichtungen 9, 10. Hierzu gehört ein Kupplungsbolzen 9 in dem einen Werkstückträger 2.1 - 2.n-1 und ein entsprechendes Kupplungsgehäuse 10 in dem jeweils benachbarten Werkstückträger 2.2 - 2.n. Ferner sind Späneabweiser 11 vorhanden, die an den einzelnen Werkstückträgern 2.1 - 2.n beidseitig der Schiene 1 sowie dieser benachbart angeordnet sind. In bevorzugter Ausführung sind die einzelnen Werkstückträger 2.1 - 2.n L-förmig ausgebildet.

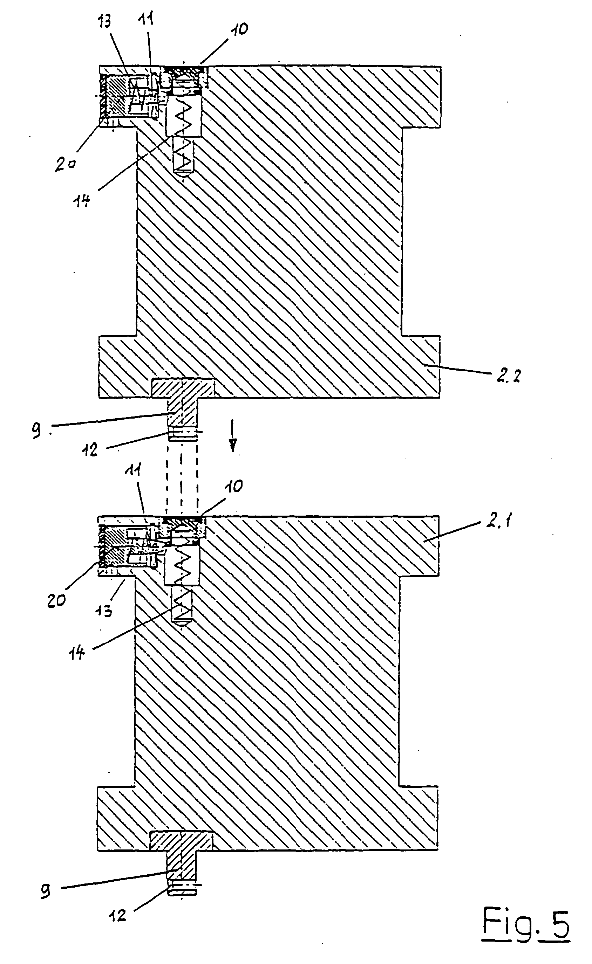

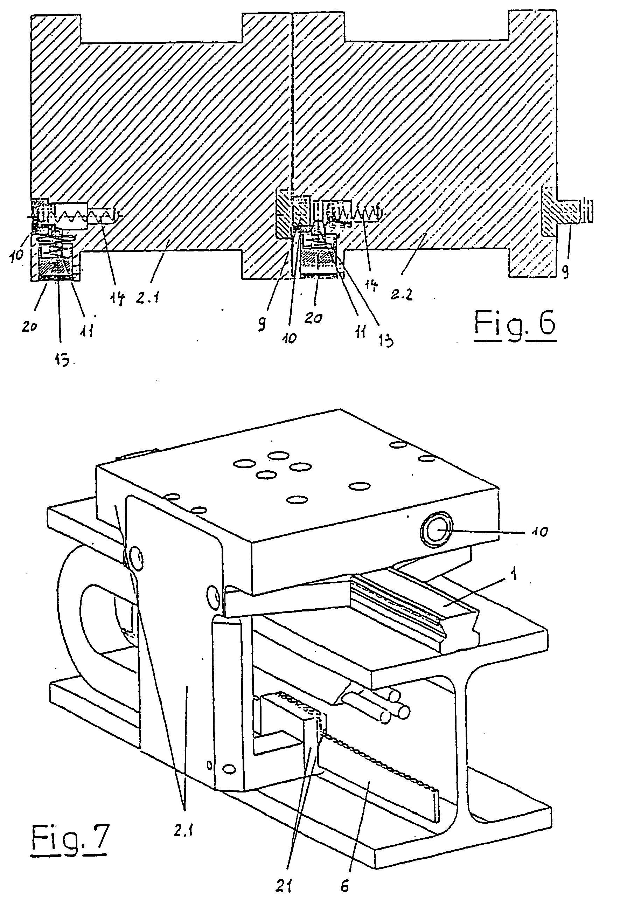

Aus den Fig. 5 und 6 sind die an den Werkstückträgern 2.1 - 2.n vorgesehenen Kupplungsvorrichtungen 9, 10 näher ersichtlich. Auch hier erkennt man den jeweiligen an der einen Seite des betreffenden Werkstückträgers angeordneten Kupplungsbolzen 9 und das ihm entsprechende Kupplungsgehäuse 10, das an der gegenüberliegenden Seite des benachbarten Werkstückträgers angeordnet ist.

Die Kupplungsvorrichtungen 9, 10 sind zweckmäßigerweise als sogenannte Riegelkupplungen ausgebildet. Wie aus den Abbildungen ersichtlich, ist das Kupplungsgehäuse 10 mit einem fernsteuerbaren Riegelbolzen 11 ausgestattet, der im gekuppelten Zustand, senkrecht zur Achse 20 des Riegelbolzens 11, in eine Riegelkerbe 12 am Kupplungsbolzen 9 lösbar kraftschlüssig eingreift. Der Riegelbolzen 11 ist dabei gegen die Wirkung der Kraft einer Feder 13, insbesondere hydro-pneumatisch, steuerbar gelagert. Außerdem ist vorgesehen, daß der Kupplungsbolzen 9 gegen die Wirkung der Kraft einer Feder 14 in das Kupplungsgehäuse 10 einführbar ist.

Fig. 7 zeigt die Schiene 1 mit dem daran verlaufend angeordneten Antrieb, nämlich einem Zahnriemen 6. Hierüber ist der Werkstückträger 2.1 angetrieben, der zum Zwecke der Kupplung mit dem Zahnriemen 6 mit einer fernsteuerbaren Klemmkupplung 21 ausgestattet ist. Zweckmäßigerweise wird die Klemmkupplung 21 hydro-pneumatisch ferngesteuert.

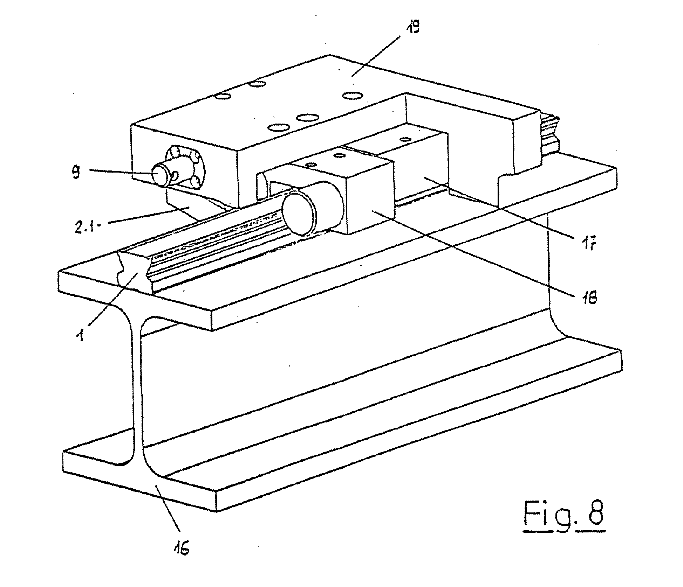

Fig. 8 zeigt einen der Werkstückträger 2.1 - 2.n auf einer Schiene 1, welche auf einem schienenartigen Träger 16 angeordnet ist. Entlang der Schiene 1 ist ein Führungswagen 17 verfahrbar, der ein steuerbares Klemmelement 18 hat, welches der kraftschlüssigen, lösbaren Fixierung des Werkstückträgers 2.1 - 2.n an der Schiene 1 dient. Der Werkzeugträger 2.1 - 2.n trägt eine Grundplatte 19, auf der das zu bearbeitende Werkstück kraftschlüssig lösbar angeordnetwerden kann. Der Kupplungsbolzen 9 des Werkstückträgers 2.1 bis 2.n ist hier an der Grundplatte 19 angeordnet.

Die Kupplungsvorrichtungen 9, 10 der Werkstückträger 2.1 - 2.n können auch als Magnetkupplungen oder Haftkupplungen, wie unter Anwendung von Vakuum, ausgebildet sein.

Für bestimmte Einsatzfälle der Positioniereinrichtung kann es ferner vorgesehen sein, die Kupplungsvorrichtungen 9, 10 entfallen zu lassen, was voraussetzt, daß die Schiene 1 schräg oder vertikal angeordnet ist. Hierbei werden die sonst erforderlichen Zugkräfte zwischen den verfahrbaren Werkstückträgern durch die Schwerkraft ersetzt, und deshalb muß bei dieser Variante der angetriebene Werkstückträger 2.1 zuunterst angeordnet sein. Über den angetriebenen Werkstückträger 2.1 werden die weiteren selbst nicht angetriebenen Werkstückträger 2.2 - 2.n nach oben verfahren bzw. angehoben oder abgesenkt, wobei mit dem Beginn des Absenkens zuerst der zuoberst angeordnete Werkstückträger in der ihm zugewiesenen Position durch Ansteuern der Fixiervorrichtung, beispielsweise des Klemmelementes 18, an der Schiene 1 festgelegt wird und nachfolgend beim weiteren Absenken in gleicher Weise die weiteren Werkstückträger an der Schiene 1 positioniert werden.

Grundsätzlich kann die Schiene 1 beliebige Querschnitte aufweisen, sofern dies zur Führung der Werkstückträger 2.1 - 2.n von Vorteil sein sollte. In der praktischen Verwendung werden zwei oder mehrere parallel zueinander angeordnete, in Querrichtung zueinander verfahrbare Schienen 1 vorgesehen, darauf wird nachstehend noch näher eingegangen.

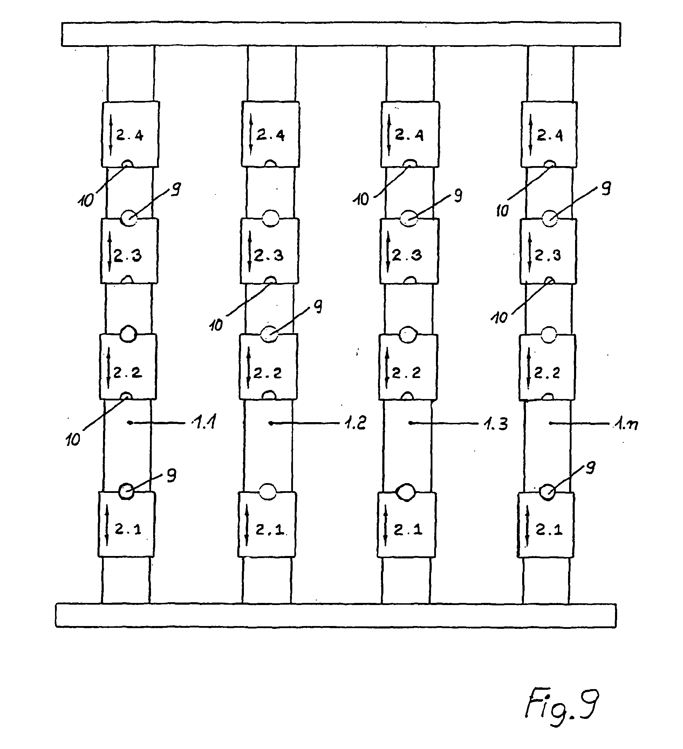

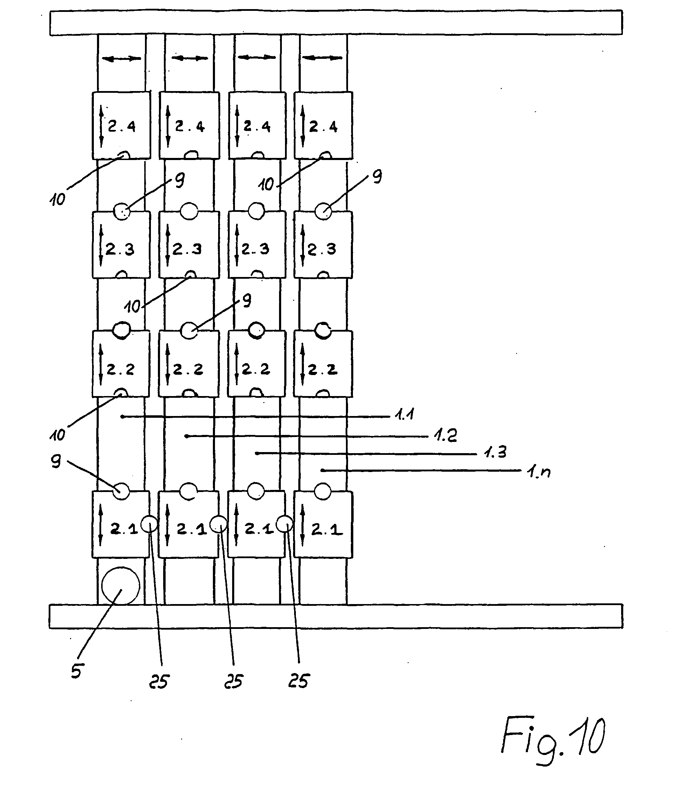

Die Positioniereinrichtung, die mit mehreren der beschriebenen Schienen 1 und der darauf verfahrbaren Werkstückträger 2.1 - 2.n ausgestattet ist, wird bevorzugt bei Werkzeugmaschinen eingesetzt, mit denen plattenförmige Werkstücke aus Holz oder Holzersatzstoffen bearbeitet werden. Hierbei sind die Werkstückträger als sogenannte Saugspanner ausgebildet, die mit ihren Oberseiten die Aufspannebene für die plattenförmigen Werkstücke bilden. Die Draufsicht auf eine solche Aufspannebene zeigen die Fig. 9 und 10.

Für das Spannen von plattenförmigen Werkstücken mit größeren Formaten wird eine Mehr- oder Vielzahl von Werkstückträgern 2.1 - 2.n benötigt, die auf mehreren parallel nebeneinander angeordneten Schienen 1.1 - 1.n angeordnet sind. Die Schienen 1.1. - 1.n sind in ihrer Querrichtung relativ zueinander verfahrbar, womit jeder der Werkstückträger 2.1 - 2.n innerhalb eines Bereichs der Aufspannebene für die betreffenden Werkstücke positioniert werden kann.

Beim Ausführungsbeispiel nach Fig. 9 sind die Werkstückträger 2.1 auf jeder der Schienen 1.1 - 1.n die angetriebenen Werkstückträger und die übrigen, nicht selbst angetriebenen Werkstückträger 2.2 - 2.n können hier in derjenigen Weise auf der betreffenden Schiene 1.1 bis 1.n positioniert werden, wie es vorstehend beschrieben ist.

Fig. 10 zeigt eine Positioniereinrichtung ähnlich derjenigen von Fig. 9, die jedoch hinsichtlich des Antriebs zum Verfahren der Werkstückträger 2.1 - 2.n weiter vereinfacht ist. Von den insgesamt vorhandenen sechzehn Werkstückträgern 2.1 - 2.4 ist hier lediglich noch einziger mit einem Antrieb versehen, und es handelt sich hier um den Werkstückträger 2.1 auf der Schiene 1.1. Über den Motor 5 wird dieser Werkstückträger 2.1 entlang der Schiene 1.1 in der vorbeschriebenen Weise verfahren. Zugleich können die miteinander parallelen Schienen 1.1 - 1.n quer zu ihrer Längserstreckung in eine miteinander benachbarte Position gebracht werden, die Fig. 10 veranschaulicht. Hierbei kommen über Kupplungen 25, die sich an den auf den Schienen 1.1 - 1.n positionsgleichen Werkstückträgern 2.1 längsseitig bezogen auf die Schienen 1.1 - 1.n befinden, miteinander verbunden werden, womit ein synchrones Verfahren sämtlicher Werkstückträger 2.1 sozusagen schienenübergreifend vorgenommen werden kann. Unabhängig davon sind die Werkstückträger 2.1 - 2.n auf jeder Schiene 1.1 - 1.n mit den vorstehend erläuterten Kupplungsvorrichtungen 9, 10 ausgestattet, weswegen über das Verfahren des jeweiligen Werkzeugträgers 2.1 auf jeder Schiene 1.1 - 1.n in der vorbeschriebenen Weise jeder der weiteren, nicht selbst angetriebenen Werkzeugträger 2.2 - 2.n positioniert werden kann. Wie bei den vorbeschriebenen Ausführungsbeispielen auch ist nämlich jeder der Werkstückträger 2.1 - 2.n unabhängig von den anderen für sich auf der betreffenden Schiene 1.1 bis 1.n fixierbar, wozu eine vom Positionierantrieb unabhängige Fixiereinrichtung vorgesehen ist.

## Patentansprüche

1. Positioniereinrichtung für auf zwei oder mehreren nebeneinander angeordneten Schienen (1) angeordnete Werkstückträger (2.1 - 2.n), wobei zwei oder mehrere Werkstückträger (2.1 - 2.n) auf jeder Schiene (1) in deren Längsrichtung hintereinander verfahrbar angeordnet und unabhängig voneinander in wählbaren Positionen fixierbar sowie dazu entsprechend ansteuerbar sind,
**dadurch gekennzeichnet,**
**daß** die auf den Schienen (1) verfahrbaren Werkstückträger (2.1 - 2.n) nebeneinander angeordnet sind und Kupplungsvorrichtungen (9, 10) aufweisen, mit denen sie mit jeweils zumindest einem auf der zugeordneten Schiene (1) benachbarten Werkstückträger (2.1 - 2.n) kuppelbar sind, wobei zum Verfahr-Antrieb jeweils nur eines der Werkstückträger (2.1 - 2.n) auf einer Schiene (1) gegebenenfalls unter Mitnahme wenigstens eines der weiteren, nicht selbstangetriebenen Werkstückträger (2.2 - 2.n) eine Antriebseinheit (5, 15) an der Schiene (1) und/oder an diesem einen Werkstückträger (2.1) vorgesehen ist.

2. Positioniereinrichtung nach Anspruch 1,
**dadurch gekennzeichnet,**
**daß** die Kupplungsvorrichtungen (9, 10) an den Werkstückträgern (2.1 - 2.n) als Riegelkupplungen ausgebildet sind.

3. Positioniereinrichtung nach Anspruch 2
**dadurch gekennzeichnet,**
**daß** die Riegelkupplungen (9, 10) zum einen aus einem an dem jeweils einen Werkstückträger (2.1 - 2.n) angeordneten Kupplungsbolzen (9) und zum anderen aus an dem jeweils zweiten Werkstückträger (2.2 - 2.n) angeordneten Kupplungsgehäuse (10) bestehen, welches dem Kupplungsbolzen (9) koaxial gegenüberliegt und einen fernsteuerbaren Riegelbolzen (11) aufweist, der in Kupplungslage in eine Riegelkerbe (12) am im Kupplungsgehäuse (10) aufgenommenen Kupplungsbolzen (9) formschlüssig eingreift.

4. Positioniereinrichtung nach Anspruch 3,
**dadurch gekennzeichnet,**
**daß** der Riegelbolzen (11) gegen die Kraft einer Feder (13) hydro-pneumatisch steuerbar verschieblich ist.

5. Positioniereinrichtung nach einem der Ansprüche 1 - 4,
**dadurch gekennzeichnet,**
**daß** der Kupplungsbolzen (9) entgegen der Kraft einer Feder (14), die im Kupplungsgehäuse (10) angeordnet ist, in dieses einführbar ist.

6. Positioniereinrichtung nach einem der Ansprüche 1 - 5,
**dadurch gekennzeichnet,**
**daß** jeweils der am Vorderende der Reihe der Werkstückträger (2.1 - 2.n) auf einer Schiene (1) angeordnete Werkstückträger (2.1) der angetriebene Werkstückträger ist.

7. Positioniereinrichtung nach einem der Ansprüche 1 - 6,
**dadurch gekennzeichnet,**
**daß** die Antriebseinheit (5, 15) für den angetriebenen Werkstückträger (2.1) einen parallel mit der Schiene (1) verlaufenden, mittels eines Motors (5) angetriebenen Zahnriemen (15) aufweist.

8. Positioniereinrichtung nach Anspruch 7,
**dadurch gekennzeichnet,**
**daß** der angetriebene Werkstückträger (2.1) und der Zahnriemen (15) mittels einer Kupplung (21) mechanisch miteinander verbindbar sind.

9. Positioniereinrichtung nach Anspruch 8,
**dadurch gekennzeichnet,**
**daß** die Kupplung (21) steuerbar ist.

10. Positioniereinrichtung nach einem der Ansprüche 1 - 9,
**dadurch gekennzeichnet,**
**daß** die Werkstückträger (2.1 - 2.n) jeweils aus einem L-förmig ausgebildeten, auf der Schiene (1) geführten Führungswagen (17) und einer damit gekoppelten Grundplatte (19) zur Aufnahme und Anordnung der Werkstücke bestehen.

11. Positioniereinrichtung nach einem der Ansprüche 1 - 10,
**dadurch gekennzeichnet,**
**daß** die Werkstückträger (2.2 - 2.n) über den jeweils einen angetriebenen Werkstückträger (2.1) sowohl im Schubbetrieb als auch im Zugbetrieb verfahrbar sind, wobei im Schubbetrieb die Kupplungsvorrichtungen (9, 10) außer Eingriff sind und im Zugbetrieb in Eingriff miteinander stehen.

12. Positioniereinrichtung nach einem der Ansprüche 1 - 11,
**dadurch gekennzeichnet,**
**daß** anstelle eines auf jeder Schiene (1) vorhandenen, angetriebenen Werkstückträgers (2.1) nur auf einer der Schienen (1), der Schiene (1.1), ein solcher angetriebener Werkstückträger (2.1) angeordnet ist, der an zumindest einer seiner an den Längsseiten der Schiene (1.1) liegenden Seiten eine Kupplung (25) hat, mit der er mit einem der nicht selbst angetriebenen Werkstückträger (2.1 - 2.n) der an dieser Schienenlängsseite benachbart positionierbaren, zweiten Schiene (1.2) kuppelbar ist, wobei in gleicher Weise dieser mittelbar angetriebene Werkstückträger (2.1) auf der zweiten Schiene (1.2) gegebenenfalls mit einem Werkstückträger (2.1) kuppelbar ist, der auf der dritten, der zweiten Schiene (1.2) benachbart zu positionierenden Schiene (1.3) angeordnet ist und wobei sich gegebenenfalls diese Anordnung bis zur Schiene (1.n) wiederholt.

## Claims

1. Positioning device for workpiece carriers (2.1 - 2.n) placed on two or more rails (1) lying next to one another, two or more said workpiece carriers (2.1 - 2.n) being distributed along each rail (1), one behind the other along the length of said rail, along which each can run and be set independently of the others in positions to be selected, and therefore are controllable, wherein
said workpiece carriers (2.1 - 2.n) - that can run along said rails (1) and are placed one next to the other - feature coupling devices (9, 10) that allow for the coupling of said workpiece carriers (2.1 - 2.n) to at least one of the neighbouring workpiece carriers (2.1 - 2.n) distributed along the corresponding rail (1), where only one of said workpiece carriers (2.1 - 2.n) is driven on said one rail (1), possibly driving at least one of the other, non self-driven workpiece carriers (2.2 - 2.n), a driving unit (5, 15) on rail (1) and/or on one of said workpiece carriers (2.1 - 2.n) doing the driving.

2. The positioning device of claim 1, wherein
the coupling devices (9, 10) on said workpiece carriers (2.1 - 2.n) are bolt coupling devices.

3. The positioning device of claim 2, wherein said bolt coupling devices (9, 10) consists of a coupling pin (9) placed on said coupling devices (2.1 - 2.n) and a coupling box (10) located on the second workpiece carrier (2.2 - 2.n), the latter coaxially facing said coupling pin (9) and showing a remotely controllable coupling pin device (11) which, when in coupling position, positively locks into a bolting notch (12) on said coupling pin (9), once said coupling pin (9) has moved into said coupling box (10).

4. The positioning device of claim 3, wherein said coupling bolt (11) can move, being hydro-pneumatically driven against the resilience of a spring (13).

5. The positioning device according to one of the claims 1 to 4, wherein said coupling bolt (9) can move into said coupling box (10) against the resilience of a spring (14) placed inside said coupling box (10).

6. The positioning device according to one of the claims 1 to 5, wherein the workpiece carrier (2.1) placed at the upper end of the workpiece carrier row (2.1 - 2.n) on said rail (1) is the driven workpiece carrier.

7. The positioning device according to one of the claims 1 to 6, wherein the driving unit (5, 15) of said driven workpiece carrier (2.1) has a toothed belt (15) driven by a motor (5) and running parallel to rail (1).

8. The positioning device of claim 7, wherein said driven workpiece carrier (2.1) and said toothed belt (15) can be mechanically linked to one another by a coupling device (21).

9. The positioning device of claim 8, wherein said coupling device (21) is controllable.

10. The positioning device according to one of the claims 1 to 9, wherein said workpiece carriers (2.1 - 2.n) each comprise a L-shaped guide carriage (17) running on said rail (1) and a base-plate (19) coupled thereto, which holds and arranges the workpieces.

11. The positioning device according to one of the claims 1 to 10, wherein said workpiece carriers (2.2 - 2.n) can be either pushed or pulled by the driven workpiece carrier (2.1), the coupling devices (9, 10) remaining unlocked during the pushing motion and being locked during the pulling motion.

12. The positioning device according to one of the claims 1 to 11, wherein - instead of having a driven workpiece carrier (2.1) on each rail (1)- there is such a driven workpiece carrier (2.1) on only one of said rails (1), i.e. rail (1.1), the latter showing - on at least one of its sides facing said rail (1.1) along its length - a coupling device (25) to couple it to one of the non self-driven workpiece carriers (2.1 - 2.n) on a second rail (1.2) which can be brought to a neighbouring position; in the same way, and if necessary, this directly driven workpiece carrier (2.1) on said second rail (1.2) can be coupled to a workpiece carrier (2.1) on a third rail (1.3), which has to be positioned close to said second rail (1.2), this distribution repeating itself all the way through to rail (1.n) if necessary.

## Revendications

1. Dispositif de positionnement pour des porte-pièces (2.1 - 2.n) posés sur deux ou plusieurs rails (1) placés l'un à côté de l'autre, où deux ou plusieurs porte-pièces (2.1 - 2.n) sont placés sur chaque rail (1) l'un derrière l'autre dans la longueur dudit rail sur lequel ils peuvent être déplacés et fixés indépendamment les uns des autres dans des positions sélectionnables, et sont ainsi commandable, **caractérisé en ce que**
les porte-pièces (2.1 - 2.n) capables de se déplacer sur lesdits rails (1) sont placés l'un à côté de l'autre et présentent des dispositifs d'accouplement (9, 10) grâce auxquels ils peuvent chacun s'accoupler à au moins un des porte-pièces voisins (2.1 - 2.n) placés sur le rail (1) attribué, où on prévoit une unité d'entraînement (5, 15) sur le rail (1) et/ou sur l'un desdits porte-pièces (2.1 - 2.n) pour l'entraînement de déplacement concernant à chaque fois un seul desdits porte-pièces (2.1 - 2.n) d'un rail (1), qui entraîne le cas échéant au moins un des autres porte-pièces (2.2 - 2.n) non-équipés d'un entraînement propre.

2. Dispositif de positionnement selon la revendication 1,
**caractérisé en ce que**
les dispositifs d'accouplement (9, 10) des porte-pièces (2.1 - 2.n) sont des accouplements à verrouillage.

3. Dispositif de positionnement selon la revendication 2,
**caractérisé en ce que**
les dispositifs d'accouplement (9, 10) sont constitués, d'une part d'un écrou d'accouplement (9) placé sur le porte-pièces (2.1 - 2.n) et, d'autre part, d'un carter d'accouplement (10) situé sur le deuxième porte-pièces (2.2 - 2.n) qui fait coaxialement face à l'écrou d'accouplement (9) et présente un verrou (11) télécommandable qui, en position d'accouplement, s'encliquette mécaniquement dans une encoche de verrouillage (12) que présente l'écrou d'accouplement (9) introduit dans le carter d'accouplement (10).

4. Dispositif de positionnement selon la revendication 3,
**caractérisé en ce que**
le verrou (11) peut se déplacer par commande hydropneumatique en réponse malgré la résistance d'un ressort (13).

5. Dispositif de positionnement selon une des revendications 1 à 4, **caractérisé en ce que** l'écrou d'accouplement (9) peut être introduit dans le carter d'accouplement (10) malgré la résistance d'un ressort (14) placé dans ledit carter d'accouplement (10).

6. Dispositif de positionnement selon une des revendications 1 à 5, **caractérisé en ce que** le porte-pièces (2.1) situé en tête de la rangée de porte-pièces (2.1 - 2.n) sur ledit rail (1) est le porte-pièces entraîné.

7. Dispositif de positionnement selon une des revendications 1 à 6, **caractérisé en ce que** l'unité d'entraînement (5, 15) du porte-pièces entraîné (2.1) présente une courroie dentée (15) parallèle au rail (1) et entraînée par un moteur (5).

8. Dispositif de positionnement selon la revendication 7,
**caractérisé en ce que**
le porte-pièces entraîné (2.1) et la courroie dentée (15) peuvent être reliés mécaniquement l'un à l'autre par un accouplement (21).

9. Dispositif de positionnement selon la revendication 8,
**caractérisé en ce que**
l'accouplement (21) est réglable.

10. Dispositif de positionnement selon une des revendications 1 à 9, **caractérisé en ce que** les porte-pièces (2.1 - 2.n) sont constitués chacun d'un chariot de guidage (17) en L qui se déplace sur le rail (1) et d'un socle (19) qui y est accouplé et sert à recevoir et arranger les pièces.

11. Dispositif de positionnement selon une des revendications 1 à 10, **caractérisé en ce que** les porte-pièces (2.2 - 2.n) peuvent être déplacés, par le biais du porte-pièces entraîné (2.1), aussi bien en poussant qu'en tirant, les dispositifs d'accouplement (9, 10) n'étant pas en prise lorsque le déplacement se fait en poussant et étant en prise lors du déplacement en tirant.

12. Dispositif de positionnement selon une des revendications 1 à 11, **caractérisé en ce que** au lieu d'un porte-pièces entraîné (2.1) présent sur chaque rail (1), un tel porte-pièces entraîné (2.1) n'est présent que sur un des rails (1), le rail (1.1), qui possède sur au moins une de ses faces se trouvant dans la longueur du rail (1.1) un accouplement (25) qui permet de l'accoupler à un des porte-pièces ne possédant pas d'entraînement propre (2.1 - 2.n) d'un second rail (1.2) qui peut être positionné à proximité où, de même manière, ce porte-pièces directement entraîné (2.1) du second rail (1.2) peut être accouplé, le cas échéant, à un porte-pièces (2.1) qui se trouve sur un troisième rail (1.3) qui devra être positionné à proximité du second rail (1.2) et où cet agencement se répète, le cas échéant, jusqu'au rail (1.n).
